# FASCICULE DE BREVET EUROPEEN

(11) **EP 2 686 946 B1**
(45) Date de publication et mention de la délivrance du brevet: **17.06.2015**
(21) Numéro de dépôt: 12712336.2
(22) Date de dépôt: 07.03.2012
(51) Int. Cl.: H02M 5/458

(54) **ALIMENTATION EN ENERGIE ELECTRIQUE D'UN AERONEF**
ELEKTRISCHE ENERGIEVERSORGUNG EINES FLUGZEUGS
ELECTRICAL ENERGY SUPPLY OF AN AIRCRAFT

(30) Priorité: 17.03.2011 FR 1152186
(43) Date de publication de la demande: 22.01.2014
(73) Titulaire: Hispano Suiza, 92700 Colombes (FR)
(72) Inventeur: DE WERGIFOSSE, Eric, F-77515 Saint Augustin (FR); RAMBAUD, Julien, F-91540 Echarcon (FR); VIEILLARD, Sébastien, F-77720 La Chapelle Gauthier (FR)
(74) Mandataire: David, Alain
(86) Numéro de dépôt international: PCT/FR2012/050467
(87) Numéro de publication internationale: WO 2012/123663

(56) Documents cités:
- EP-A2- 0 376 728
- DE-A1- 19 519 424
- US-A- 5 233 286

## Description

### Arrière-plan de l'invention

L'invention se rapporte à l'alimentation en énergie électrique d'un réseau dédié à un équipement d'un aéronef.

Il est connu d'alimenter les réseaux électriques à bord d'un aéronef à partir d'un générateur embarqué. Le générateur est typiquement un générateur relié au moteur de propulsion de l'aéronef ou à un groupe auxiliaire de puissance (APU pour *"Auxiliary Power Unit"*) à turbine à gaz.

Un tel générateur comprend de façon usuelle une machine électrique principale qui forme génératrice électrique principale fonctionnant en mode synchrone après démarrage et allumage de la turbomachine associée. La machine électrique principale possède un inducteur rotorique et des enroulements statoriques quifournissent une énergie électrique alternative à un bus triphasé d'un réseau électrique de l'aéronef.

Le réseau dédié comprend également un équipement d'alimentation dans lequel un bus continu est alimenté à partir de la tension alternative du bus triphasé, par l'intermédiaire d'un redresseur. L'équipement d'alimentation alimente des actionneurs électriques triphasés à partir de la tension continue du bus continu, par l'intermédiaire de convertisseurs de puissance de type onduleur.

La tension alternative du bus triphasé ou la tension continue du bus continu est régulée au moyen d'une unité de régulation générateur ou GCU ("Generator Control Unit") qui alimente en courant continu un inducteur statorique d'une excitatrice dont les enroulements rotoriques sont reliés à l'inducteur rotorique de la machine électrique principale via un redresseur tournant. Typiquement, l'unité de régulation du générateur fait varier le courant continu d'excitation de manière à maintenir la tension alternative du bus triphasé ou la tension continue du bus continu égale à une valeur de consigne constante.

L'énergie électrique nécessaire à l'alimentation de l'inducteur de l'excitatrice peut être fournie par une génératrice électrique auxiliaire telle qu'une génératrice synchrone à aimants permanents, ou peut être dérivée du réseau électrique de bord de l'aéronef.

Dans un réseau électrique de ce type, les convertisseurs de puissance de type onduleur qui alimentent les actionneurs doivent être dimensionnés pour tenir compte des contraintes électriques et thermiques liées à la puissance mécanique nécessaire au fonctionnement de l'actionneur. Ces convertisseurs de puissance sont généralement des équipements lourds et encombrants.

Le document US 5,232,286 montre un procédé de génération de tension correspondant au préambule de la revendication 1.

### Objet et résumé de l'invention

L'invention vise à fournir un procédé et un module de génération, qui permettent d'éviter au moins certains des inconvénients de l'art antérieur précité.

A cet effet, l'invention propose un procédé de génération mis en oeuvre par un module de génération d'un réseau électrique d'un aéronef, ledit réseau électrique comprenant une ligne d'alimentation alimentée par ledit module de génération, un bus continu alimenté à partir de ladite ligne d'alimentation par l'intermédiaire d'un redresseur, et au moins un actionneur électrique alimenté en tension alternative à partir du bus continu par l'intermédiaire d'un onduleur,
le procédé de génération comprenant une étape de fourniture d'une tension alternative sur ladite ligne d'alimentation en fonction d'une consigne de tension et d'une tension mesurée dans ledit réseau électrique,
ledit procédé de génération étant caractérisé en ce qu'il comprend une étape de détermination de ladite consigne de tension en fonction d'un paramètre de fonctionnement dudit actionneur.

Ainsi, grâce à ces caractéristiques, la tension continue du bus continu dépend du paramètre de fonctionnement de l'actionneur. Cela permet de limiter le dimensionnement de l'onduleur et/ou de réduire la dissipation de l'onduleur.

Selon un mode de réalisation, la tension mesurée est la tension du bus continu.

Le paramètre de fonctionnement peut être une vitesse de rotation de l'actionneur.

Corrélativement, l'invention propose un module de génération pour un réseau électrique d'un aéronef, ledit module de génération étant apte à fournir une tension alternative en fonction d'une consigne de tension et d'une tension mesurée dans ledit réseau électrique, ledit réseau électrique comprenant une ligne d'alimentation alimentée avec ladite tension alternative par ledit module de génération, un bus continu alimenté à partir de ladite ligne d'alimentation par l'intermédiaire d'un redresseur, et au moins un actionneur électrique alimenté en tension alternative à partir du bus continu par l'intermédiaire d'un onduleur,
ledit module de génération étant caractérisée en ce qu'il comprend un module de détermination de ladite consigne de tension en fonction d'un paramètre de fonctionnement dudit actionneur.

Dans un mode de réalisation, le module de génération comprend un générateur et une unité de régulation générateur, le générateur étant apte à fournir ladite tension alternative en fonction d'un courant de régulation déterminé par l'unité de régulation générateur, l'unité de régulation générateur étant apte à déterminer le courant de régulation en fonction de la consigne de tension et de la tension mesurée dans ledit réseau de bord.

Les avantages et caractéristiques discutés précédemment en rapport au procédé de génération concernent également le module de génération.

L'invention fournit aussi un aéronef comprenant un réseau électrique incluant un module de génération conforme à l'invention, une ligne d'alimentation alimentée par ledit module de génération, un bus continu alimenté à partir de ladite ligne d'alimentation par l'intermédiaire d'un redresseur, et au moins un actionneur électrique alimenté en tension alternative à partir du bus continu par l'intermédiaire d'un onduleur.

### Brève description des dessins

L'invention sera mieux comprise à la lecture de la description faite ci-après, à titre indicatif mais non limitatif, en référence aux dessins annexés, sur lesquels :
- la figure 1 est un schéma d'un réseau électrique dédié à l'alimentation d'un équipement d'alimentation à bord d'un aéronef,
- la figure 2 est un graphe d'une courbe de fonctionnement d'un actionneur électrique,
- la figure 3 est un graphe qui montre les pertes électriques dans un convertisseur qui alimente un actionneur dont la courbe de fonctionnement est représentée sur la figure 2, et
- les figures 4 et 5 sont des figures similaires aux figures 2 et 3, respectivement, et concernent un autre type d'actionneur électrique.

### Description détaillée de modes de réalisation

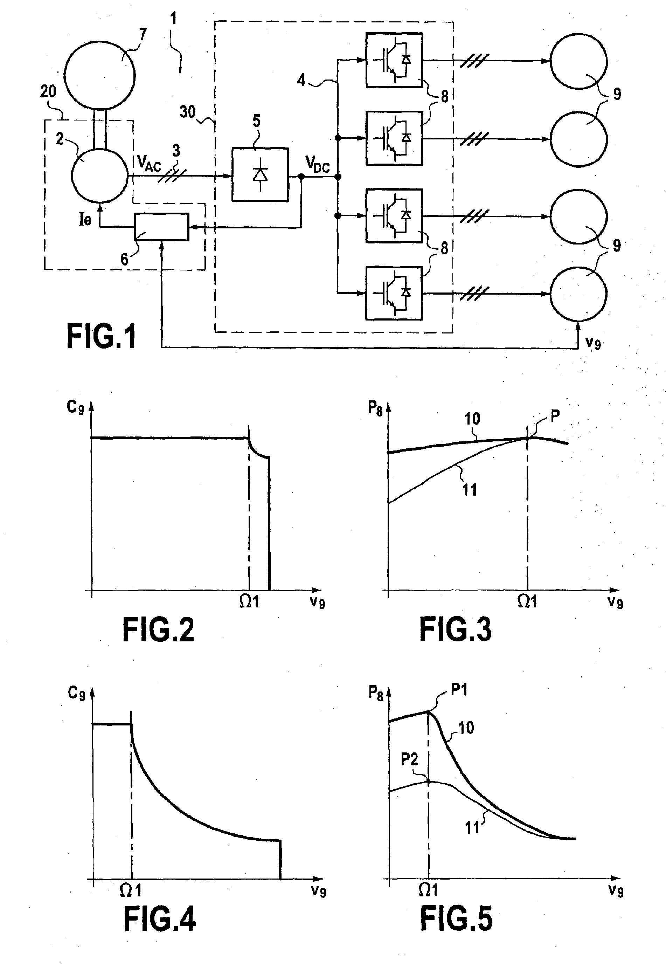

La **figure 1** représente le réseau électrique1 d'un aéronef, dans son environnement. Le réseau électrique 1 est un réseau dédié à l'alimentation d'un équipement d'alimentation 30 et comprend module de génération 20, l'équipement d'alimentation 30 et une ligne d'alimentation 3 triphasée reliant le module de génération 20 à l'équipement d'alimentation 30.

Le module de génération 20 fournit une tension triphasée V_{AC.} Dans l'exemple représenté, le module de génération 20 comprend un générateur 2 et une unité de régulation générateur 6.

Le générateur 2 est relié mécaniquement à un moteur 7, qui peut être par exemple un moteur de propulsion ou un groupe auxiliaire de puissance de l'aéronef. Le générateur 2 peut être un démarreur/générateur apte à fonctionner en moteur électrique lors du démarrage du moteur 7.

Lorsqu'il est entrainé en rotation par le moteur 7, le générateur 2 fournit une tension triphasée V_{AC} qui dépend d'un courant de régulation Iₑ fournit par l'unité de régulation générateur 6. Le générateur 2 est par exemple un générateur à trois étages du type décrit en introduction.

La ligne d'alimentation 3 est alimentée par la tension triphasée V_{AC} fournie par le générateur 2.

L'équipement d'alimentation 30 comprend un bus continu 4, un redresseur 5 et des onduleurs 8. Le bus continu 4 est alimenté en tension continue V_{DC} à partir de la tension triphasée V_{AC} de la ligne d'alimentation 3, par l'intermédiaire du redresseur 5.

Des actionneurs électriques 9 sont alimentés en énergie électrique par l'équipement d'alimentation 30. Plus précisément, chaque actionneur électrique 9 est alimenté en tension triphasée à partir du bus continu 4, par l'intermédiaire d'un onduleur 8. Chaque actionneur électrique 9 est typiquement un moteur électrique dont le fonctionnement peut être caractérisé par une vitesse de rotation, notée v₉, et par un couple, noté C₉.

L'unité de régulation générateur 6 reçoit des signaux de mesure représentatifs de la tension continue V_{DC} du bus continu 4 et de la vitesse de rotation v₉, et fournit le courant de régulation Iₑ au générateur 2.

A cet effet, l'unité de régulation générateur 6 met en oeuvre une boucle de régulation dans laquelle le courant de régulation Iₑ est déterminé en fonction de la tension continue V_{DC} du bus continu 4 et d'une consigne V_{DC_cons} de tension continue.

La consigne V_{DC_cons} est déterminée par l'unité de régulation générateur 6 en fonction de la vitesse de rotation v₉. Ainsi, dans le réseau électrique 1, la tension continue V_{DC} du bus continu 4 dépend de la vitesse de rotation v₉, ce qui permet de limiter la dissipation et le dimensionnement des onduleurs 8 comme expliqué maintenant en références aux figures 2 à 5.

On sait que la puissance mécanique Pₘ d'un actionneur électrique 9 peut être exprimée de la manière suivante : Pₘ = v₉ x C₉. On sait également que le couple C₉ croit avec le courant de phase I de l'actionneur électrique 9.

Cette puissance mécanique Pₘ correspond à une puissance électrique absorbée Pₑ proportionnelle au produit U₉ x I, où U₉ est la tension fournie à l'actionneur 9 par l'onduleur 8.

A vitesse de rotation v₉ faible, quel que soit le couple C₉, la puissance mécanique Pₘ et donc la puissance électrique absorbée Pₑ sont faibles. La tension U₉ fournie à l'actionneur 9 par l'onduleur 8 peut donc être faible.

La **figure 2** est un graphe qui représente une courbe de fonctionnement d'un premier type d'actionneur électrique 9, donnant la relation entre le couple C₉ et la vitesse de rotation v₉. Dans le cas de la figure 2, le couple C₉ est quasi maximal sur toute la plage de vitesse, jusqu'à une vitesse Ω₁.

La **figure 3** est un graphe qui représente la variation de la puissance P₈ dissipée dans un onduleur 8 relié à un actionneur électrique 9, en fonction de la vitesse v₉, pour un actionneur électrique 9 du type de la figure 2. La courbe 11 correspond à une tension continue V_{DC} qui varie avec la vitesse v₉, conformément à la présente invention. La courbe 10 correspond à une tension continue V_{DC} qui serait maintenue constante, conformément à l'art antérieur cité en introduction, et est donnée à titre de comparaison.

La puissance P₈ dissipée dans un onduleur 8 peut être décomposée entre les pertes par conduction et les pertes par commutation. Les pertes par commutations dépendent du produit V_{DC} x I. Compte tenu de la courbe de la figure 2, le courant I doit être élevé pour fournir un couple C₉ élevé, quelle que soit la vitesse de rotation v₉. Ainsi, si V_{DC} est maintenu constant, la puissance P₈ est élevée même à petite vitesse de rotation v₉, comme le montre la courbe 10.

Cependant, comme expliqué précédemment, la tension U₉ peut être faible à petite vitesse de rotation v₉. Or, la tension U₉ dépend de la tension continue V_{DC}. Si la tension U₉ peut être faible, la tension continue V_{DC} peut également être faible. Ainsi, en réduisant la tension continue V_{DC} à petite vitesse de rotation v₉, la puissance P₈ dissipée dans un onduleur 8 peut être réduite par rapport à la courbe 10, comme le montre la courbe 11.

Sur la figure 3, les courbes 10 et 11 se rejoignent en un point P à la vitesse Ω₁.

Autrement dit, dans le cas d'un actionneur électrique 9 qui présente une courbe de fonctionnement du type de la figure 2, la détermination d'une consigne V_{DC_cons} qui dépend de la vitesse de rotation v₉ des actionneurs électriques 9 permet de réduire la puissance P₈ dissipée dans l'onduleur 8. Ainsi le dimensionnement thermique de l'onduleur 8 peut être limité. Cependant, le dimensionnement électrique de l'onduleur 8 doit permettre le fonctionnement au point P précité.

Les **figures 4 et 5** sont des graphes similaires aux graphes des figures 2 et 3, respectivement, et concernent un deuxième type d'actionneur électrique 9 qui présente une courbe de fonctionnement d'une forme différente, représentée sur la figure 4. Les mêmes références que sur les figures 4 et 5 sont utilisées, sans risque de confusion.

Ici, le couple C₉ est maximal à faible vitesse jusqu'à une vitesse Ω₁, puis décroit progressivement sur le reste de la plage de vitesse.

Comme dans le cas des figures 2 et 3, la tension continue V_{DC} peut être réduite à faible vitesse de rotation. La figure 5 montre que dans ce cas, la puissance P₈ dissipée dans l'onduleur est réduite, comme dans le cas de la figure 3 (cf. courbe 11 située en dessous de la courbe 10).

De plus, ici, le point de fonctionnement P2 ou la puissance P₈ donnée par la courbe 11 est maximale correspond à une puissance réduite par rapport au point de fonctionnement P1 où la puissance P₈ donnée par la courbe 10 est maximale.

Autrement dit, dans le cas d'un actionneur électrique 9 qui présente une courbe de fonctionnement du type de la figure 4, la détermination d'une consigne V_{DC_cons} qui dépend de la vitesse de rotation v₉ des actionneurs électriques 9 permet de réduire la puissance P₈ dissipée dans l'onduleur 8, y compris de réduire la puissance P₈ dissipée maximale. Ainsi les dimensionnements thermique et électrique de l'onduleur 8 peuvent être limités.

L'unité de régulation générateur 6 comprend un module de détermination qui convertit la vitesse de rotation v₉ en une consigne V_{DC_cons}. Le module de détermination utilise par exemple une table de correspondance ou une loi de conversion. L'homme du métier est capable de concevoir un module de détermination qui convient à une courbe de fonctionnement donnée, par exemple du type de la figure 2 ou de la figure 4.

Dans une variante, l'unité de régulation générateur 6 utilise, à la place de la vitesse de rotation v₉, un autre paramètre de fonctionnement de l'actionneur électrique 9 pour déterminer la consigne V_{DC_cons}.

Dans une variante également, la régulation mise en oeuvre par l'unité de régulation générateur 6 vise la tension triphasée V_{AC} de la ligne d'alimentation 3. Dans ce cas, l'unité de régulation générateur 6 détermine une consigne V_{AC_cons} de tension triphasée en fonction de la vitesse v₉ ou d'un autre paramètre de fonctionnement de l'actionneur électrique 9.

On a décrit un module de génération 20 dans lequel la tension triphasée fournie par le générateur 2 dépend du courant de régulation déterminé par l'unité de régulation 6. L'invention n'est toutefois pas limitée à ce type de module de génération. Ainsi, le module de génération peut comprendre une génératrice asynchrone auto-excitée associée à des capacités commutées pour assurer différents paliers de tension. En variante, le module de génération peut comprendre une génératrice asynchrone auto-excitée associée à un onduleur fournissant un courant de magnétisation pour une régulation continue. En variante également, le module de génération peut comprendre une génératrice synchrone à aimants permanents multi-enroulement pour une régulation par paliers.

Un exemple d'application du réseau électrique 1 est le roulement au sol écologique (« *Green Taxiing»* en anglais) d'un aéronef. Dans cet exemple, les actionneurs 9 sont des moteurs électriques aptes à faire rouler l'aéronef au sol, et le moteur 7 est un groupe auxiliaire de puissance. Les moteurs de propulsion de l'aéronef peuvent alors être éteints, ce qui permet une importante économie de carburant.

## Revendications

1. Procédé de génération d'une tension mis en oeuvre par un module de génération (20) d'un réseau électrique (1) d'un aéronef, ledit réseau électrique (1) comprenant une ligne d'alimentation (3) alimentée par ledit module de génération (20), un bus continu (4) alimenté à partir de ladite ligne d'alimentation (3) par l'intermédiaire d'un redresseur (5), et au moins un actionneur (9) électrique alimenté en tension alternative à partir du bus continu (4) par l'intermédiaire d'un onduleur (8),
le procédé de génération comprenant une étape de fourniture d'une tension alternative (V_{AC}) sur ladite ligne d'alimentation (3) en fonction d'une consigne de tension et d'une tension mesurée dans ledit réseau électrique (1),
ledit procédé de génération étant **caractérisé en ce qu'**il comprend une étape de détermination de ladite consigne de tension en fonction d'un paramètre de fonctionnement (v₉) dudit actionneur (9).

2. Procédé de génération selon la revendication 1, dans lequel ladite tension mesurée est la tension (V_{DC}) du bus continu (4).

3. Procédé de génération selon la revendication 1 ou 2, dans lequel le paramètre de fonctionnement (v₉) est une vitesse de rotation dudit actionneur (9).

4. Procédé de génération selon l'une des revendications 1 à 3, dans lequel ledit module de génération (320) comprend un générateur (2) et une unité de régulation générateur (6), le générateur (2) étant apte à fournir ladite tension alternative (V_{AC}) en fonction d'un courant de régulation (Iₑ) déterminé par l'unité de régulation générateur (6), l'unité de régulation générateur (6) étant apte à déterminer le courant de régulation (Iₑ) en fonction de la consigne de tension et de la tension mesurée dans ledit réseau électrique (1).

5. Module de génération (20) d'une tension pour un réseau électrique (1) d'un aéronef, ledit module de génération (20) étant apte à fournir une tension alternative (V_{AC}) en fonction d'une consigne de tension et d'une tension mesurée dans ledit réseau électrique (1), ledit réseau électrique (1) comprenant une ligne d'alimentation (3) alimentée avec ladite tension alternative (V_{AC}) par ledit module de génération (20), un bus continu (4) alimenté à partir de ladite ligne d'alimentation (3) par l'intermédiaire d'un redresseur (5), et au moins un actionneur (9) électrique alimenté en tension alternative à partir du bus continu (4) par l'intermédiaire d'un onduleur (8),
ledit module de génération étant **caractérisée en ce qu'**il comprend un module de détermination de ladite consigne de tension en fonction d'un paramètre de fonctionnement (v₉) dudit actionneur.

6. Module de génération (20) selon la revendication 5, comprenant un générateur (2) et une unité de régulation générateur (6), le générateur (2) étant apte à fournir ladite tension alternative (V_{AC}) en fonction d'un courant de régulation (Iₑ) déterminé par l'unité de régulation générateur (6), l'unité de régulation générateur (6) étant apte à déterminer le courant de régulation (Iₑ) en fonction de la consigne de tension et de la tension mesurée dans ledit réseau électrique (1).

7. Aéronef comprenant un réseau électrique (1) incluant un module de génération (20) selon la revendication 5 ou 6, une ligne d'alimentation (3) alimentée par ledit module de génération (20), un bus continu (4) alimenté à partir de ladite ligne d'alimentation (3) par l'intermédiaire d'un redresseur (5), et au moins un actionneur (9) électrique alimenté en tension alternative à partir du bus continu (4) par l'intermédiaire d'un onduleur (8).

## Patentansprüche

1. Verfahren zur Erzeugung einer Spannung, das von einem Erzeugungsmodul (20) eines elektrischen Netzwerks (1) eines Flugzeugs eingesetzt wird, wobei das elektrische Netzwerk (1) eine Versorgungsleitung (3), die von dem Erzeugungsmodul (20) versorgt wird, einen Gleichstromkreis (4), der von der Versorgungsleitung (3) mit Hilfe eines Gleichrichters (5) versorgt wird, und mindestens einen elektrischen Aktuator (9) umfasst, der mit Wechselspannung von dem Gleichstromkreis (4) mit Hilfe eines Wechselrichters (8) versorgt wird, wobei das Erzeugungsverfahren eine Schritt der Lieferung einer Wechselspannung (V_{AC}) an der Versorgungsleitung (3) in Abhängigkeit von einem Spannungssollwert und einer in dem elektrischen Netzwerk (1) gemessenen Spannung umfasst, wobei das Erzeugungsverfahren **dadurch gekennzeichnet ist, dass** es einen Schritt der Bestimmung des Spannungssollwerts in Abhängigkeit von einem Funktionsparameter (v₉) des Aktuators (9) umfasst.

2. Erzeugungsverfahren nach Anspruch 1, bei dem die gemessene Spannung die Spannung (V_{DC}) des Gleichstromkreises (4) ist.

3. Erzeugungsverfahren nach Anspruch 1 oder 2, bei dem der Funktionsparameter (v₉) eine Drehgeschwindigkeit des Aktuators (9) ist.

4. Erzeugungsverfahren nach einem der Ansprüche 1 bis 3, bei dem das Erzeugungsmodul (20) einen Generator (2) und eine Generatorregeleinheit (6) umfasst, wobei der Generator (2) geeignet ist, die Wechselspannung (V_{AC}) in Abhängigkeit von einem Regelstrom (lₑ), der von der Generatorregeleinheit (6) bestimmt wird, zu liefern, wobei die Generatorregeleinheit (6) geeignet ist, den Regelstrom (lₑ) in Abhängigkeit von dem Spannungssollwert und der in dem elektrischen Netzwerk (1) gemessenen Spannung zu bestimmen.

5. Modul (20) zur Erzeugung eines Spannung für ein elektrisches Netzwerk (1) eines Flugzeugs, wobei das Erzeugungsmodul (20) geeignet ist, eine Wechselspannung (V_{AC}) in Abhängigkeit von einem Spannungssollwert und einer in dem elektrischen Netzwerk (1) gemessenen Spannung zu liefern, wobei das elektrische Netzwerk (1) eine Versorgungsleitung (3), die von dem Erzeugungsmodul (20) mit der Wechselspannung (V_{AC}) versorgt wird, einen Gleichstromkreis (4), der von der Versorgungsleitung (3) mit Hilfe eines Gleichrichters (5) versorgt wird, und mindestens einen elektrischen Aktuator (9) umfasst, der mit Wechselspannung von dem Gleichstromkreis (4) mit Hilfe eines Wechselrichters (8) versorgt wird, wobei das Erzeugungsmodul **dadurch gekennzeichnet ist, dass** es ein Modul zur Bestimmung des Spannungssollwerts in Abhängigkeit von einem Funktionsparameter (v₉) des Aktuators umfasst.

6. Erzeugungsmodul (20) nach Anspruch 5, umfassend einen Generator (2) und eine Generatorregeleinheit (6), wobei der Generator (2) geeignet ist, die Wechselspannung (V_{AC}) in Abhängigkeit von einem Regelstrom (lₑ), der von der Generatorregeleinheit (6) bestimmt wird, zu liefern, wobei die Generatorregeleinheit (6) geeignet ist, den Regelstrom (lₑ) in Abhängigkeit von dem Spannungssollwert und der in dem elektrischen Netzwerk (1) gemessenen Spannung zu bestimmen.

7. Flugzeug, umfassend ein elektrisches Netzwerk (1), das ein Erzeugungsmodul (20) nach Anspruch 5 oder 6, eine Versorgungsleitung (3), die von den Erzeugungsmodul (20) versorgt wird, einen Gleichstromkreis (4), der von der Versorgungsleitung (3) mit Hilfe eines Gleichrichters (5) versorgt wird, und mindestens einen elektrischen Aktuator (9) umfasst, der mit Wechselspannung von dem Gleichstromkreis (4) mit Hilfe eines Wechselrichters (8) versorgt wird.

## Claims

1. A generation method for generating a voltage, the method being performed by a generator module (20) of an electrical network (1) of an aircraft, said electrical network (1) comprising a power supply line (3) powered by said generator module (20), a DC bus (4) powered from said power supply line (3) via a rectifier (5), and at least one electrical actuator (9) powered with AC from the DC bus (4) via an inverter (8);
the generation method comprising a step of delivering an AC voltage (V_{AC}) on said power supply line (3) as a function of a voltage setpoint and of a voltage measured in said electrical network (1);
said generation method being **characterized in that** it comprises a step of determining said voltage setpoint as a function of an operating parameter (v₉) of said actuator (9).

2. A generation method according to claim 1, wherein said measured voltage is the voltage (V_{DC}) of the DC bus (4).

3. A generation method according to claim 1 or claim 2, wherein the operating parameter (v₉) is a speed of rotation of said actuator (9).

4. A generation method according to any one of claims 1 to 3, wherein said generator module (20) comprises a generator (2) and a generator control unit (6), the generator (2) being suitable for delivering said AC voltage (V_{AC}) as a function of a control current (Iₑ) determined by the generator control unit (6), the generator control unit (6) being suitable for determining the control current (Iₑ) as a function of the voltage setpoint and of the voltage measured in said electrical network (1).

5. A voltage generator module (20) for an electrical network (1) of an aircraft, said generator module (20) being suitable for delivering an AC voltage (V_{AC}) as a function of a voltage setpoint and of a voltage measured in said electrical network (1), said electrical network (1) comprising a power supply line (3) powered with said AC voltage (Vac) by said generator module (20), a DC bus (4) powered from said power supply line (3) via a rectifier (5), and at least one electrical actuator (9) powered with AC from the DC bus (4) via an inverter (8);
said generator module being **characterized in that** it includes a module for determining said voltage setpoint as a function of an operating parameter (v₉) of said actuator.

6. A generator module (20) according to claim 5, comprising a generator (2) and a generator control unit (6), the generator (2) being suitable for delivering said AC voltage (V_{AC}) as a function of a control current (Iₑ) determined by the generator control unit (6), the generator control unit (6) being suitable for determining the control current (Iₑ) as a function of the voltage setpoint and of the voltage measured in said electrical network (1).

7. An aircraft having an electrical network (1) including a generator module (20) according to claim 5 or claim 6, a power supply line (3) powered by said generator module (20), a DC bus (4) powered from said power supply line (3) via a rectifier (5), and at least one electrical actuator (9) powered with AC from the DC bus (4) via an inverter (8).
